# EUROPEAN PATENT SPECIFICATION

(11) **EP 2 511 649 B1**
(45) Date of publication and mention of the grant of the patent: **27.11.2013**
(21) Application number: 12163544.5
(22) Date of filing: 10.04.2012
(51) Int. Cl.: G01B 7/14

(54) **Method and device for measuring of mutual distance of two magnets**
Verfahren und Vorrichtung zum Messen des Abstandes zwischen zwei Magneten
Procédé et dispositif pour mesurer la distance entre deux aimants

(30) Priority: 12.04.2011 CZ 20110211
(43) Date of publication of application: 17.10.2012
(73) Proprietor: VÚTS, a.s., 461 19 Liberec (CZ); Rieter CZ s.r.o., 56201 ÚstÍ nad Orlicí (CZ)
(72) Inventor: Pustka, Martin, 46001 Liberec (CZ); Foune, Frantisek, 56206 Ústí nad Orlicí (CZ); Skop, Petr, 46001 Liberec (CZ); Sidlof, Pavel, 46014 Liberec (CZ)
(74) Representative: Musil, Dobroslav

(56) References cited:
- JP-A- 8 305 362
- US-A- 4 352 085
- US-A1- 2007 131 134

## Description

### Technical Field

The method of measurement of mutual distance of two repulsing and mutually moving magnets situated in Halbach fields during which the Hall voltage characterising magnetic induction generated by actuation of magnetic field is verified.

The invention also relates to a measurement of mutual distance of two magnets by means of Hall sensor while each of the magnets is formed by a set of elementary members ranged in Halbach field.

### Backround art

With a line of mechanisms as cam, crank and slotted-link ones and other mechanisms and linear servomotors its actuating device performs a direct or rotational reversing periodic motion. The actuating device and eventually other operating parts of the mechanism connected to it must brake and start again in reverse direction in both terminal dead points during one period of the motion. With large moving masses reduced to an actuating device and/or big accelerations necessary for braking and/or start it is thus convenient to add to the actuating device or working mechanisms connected to it, some mechanisms accumulating kinetic energy of the mechanism at braking in the dead point and releasing it on the other hand at subsequent start-up. Suitably deformable flexible bodies as for example metal, rubber or composite springs can serve as such accumulating mechanisms. Because the braking and re-start runs for short distances, the common types of springs with linear dependance of force on deformation are not suitable for this purpose.

An use of repulsing force of magnets, solenoids or its combination is a suitable solution. Two magnets turned with direct poles against each other repulse one another while a steeply growing non-linear repulsive force is their advantage. The application of solenoids as actuating devices of a mechanism is difficult due to movable voltage supply so permanent magnets are more suitable. To reach the highest rate between the repulsive force and permanent magnets weight it is suitable to combine higher amount of magnets in a suitable structure like the Halbach field.

A certain solution is presented for example by CZ2007-214 in relation with the device for thread distribution wound up on a reel in a winding mechanism of a textile machine working place containing a longitudinal distribution rod common for a line of working places in gear with drive giving it a direct reverse motion and with control system defining position of dead points of the distribution rod. Two pairs of magnets are placed in mutual distance on the distribution rod and machine frame and each pair contains a magnet moving with the distribution rod and a magnet adjustably set on the frame while the magnets in pair are located with same poles against each other.

CZ2010-617 also solves an adjustment of magnets set on the frame using a stepper motor with self-locking transmission.

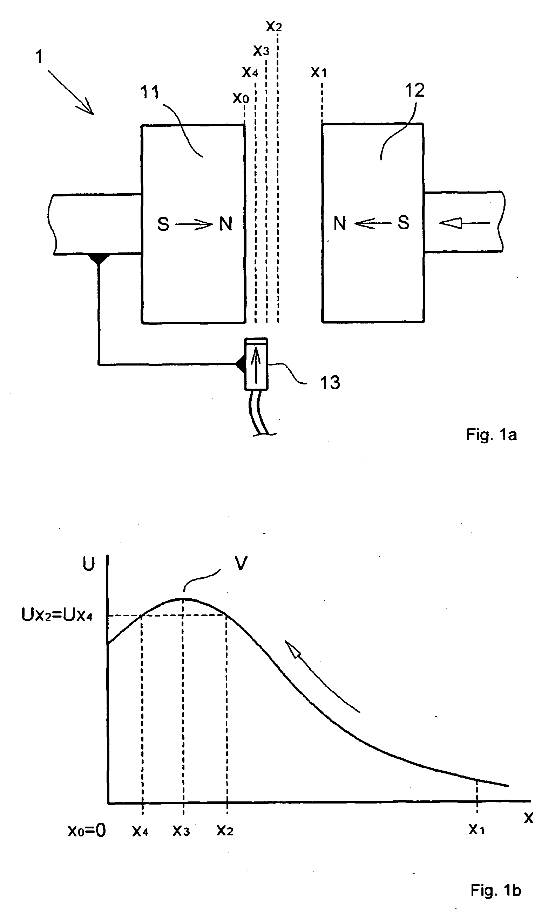

To be the energy accumulated at braking and consumed at mechanism re-start the highest it is necessary the magnets approximate one another as close as possible, generally for a distance smaller than 1 mm. On that ground the position of the dead point of the moving magnet must be definitely set which requires a measurement of the magnets mutual position within the dead point zone. At approaching of same poles of two separate, for example rod dipoles, Hall sensor located outside the magnets can be used and measure in radial direction a magnetic field "forced out" by the magnets from the space between faces of approaching magnets. A simple combination **1** shown in fig. 1a, 1b uses two axially magnetised flat circular magnets. Adjustable magnet **11** and movable magnet **12** are turned towards one another by north magnetic poles **N**, while they can also be turned together with south magnetic poles **S** without changes in repulsive effect.

The adjustable magnet **11** moves at adjusting of its position slowly in relatively small distance, eventually rests. At the same time its face related to axis of coordinate according to fig. 1b, is in position **x₀**. Near to the face and outside the adjustable magnet **11** Hall sensor **13** is located and firmly connected to the adjustable magnet **11**. The movable magnet **12** with its face contiguous to the adjustable magnet **11** approaches from **x₁**, while the repulsive force is growing and is represented by a signal **U** from Hall sensor **13**, which measures the magnetic field forced out by the magnets in radial direction. Basic imperfection of this combination is the fact, that size of the signal **U** grows with approaching magnets only to a certain mutual approximation of the magnets given by position **x₃** of the face of the adjustable magnet **12**. With further approaching behind the position **x₃** the size of signal **U** drops. Before contact of both of the magnets **11**, **12**, the signal of the Hall sensor **13** has before and after the peak of the curve in positions **x₂**, **x₄** of the face of movable magnet **12** two same sizes. **Uₓ₂**, **Uₓ₄**. To remove this imperfection the two positions **x₂**, **x₄** must be distinguished before the peak and after it. However another Hall sensor and necessary evaluating circuits must be used for it. A location of Hall sensor between the magnets is not practically possible, because its dimensions do not permit the required approaching of magnets and thus it does not enable a sufficiently high repulsive force.

The same shortage have the magnets formed by forcefully more suitable annular Halbach fields. In addition the magnetic field in this case formed in the gap between the magnets is in this case blind due to interaction of magnetic flows closing themselves between the particular magnetic poles not only in direction of ring perimeter but also transversally in radial direction.

The aim of the invention is to remove or at least reduce the imperfections of the state of the art and design a suitable device for measurement of mutual repulsive force of magnets combined in high-power Halbach field to the minimum distance of their mutual approaching.

JP-08305362 describes measuring the mutual distance of two repulsing and mutually moving magnets, during which a Hall sensor measures the voltage characterising the magnetic induction generated by the changing magnetic field. The Hall voltage is measured at the outside of one magnet.

### Principle of the invention

Aim of the invention is reached by a measurement method according to claim 1 and a device according to claim 4.

Though the magnetic field is weak at passive side of the Hallbach field, the change of magnetic field and thus the change of the signal from Hall sensor is here higher with reducing distance of the magnets and this enables an easier and more accurate definition of magnet distance. Another advantage is a monotonous growth of the signal from Hall sensor enabling easier evaluation of the signal and more accurate measurement of close distance of the magnets. At the same time the free space between the magnets enables to approach them to the minimal safe distance and thus fully use their maximum repulsive force.

The preferential way is the measurement of Hall voltage in place against north or south magnetic pole of at least one active magnetic pole while the Hall sensor nears itself with scanning surface to this pole.

### The magnetic field is the strongest in these places.

Measurement method of Hall voltage in place between north and south magnetic poles of at least a pair of active magnetic poles during which the hall sensor orientates with scanning surface vertically to the direction of magnetic induction vectors is also usable. However the magnetic field is with this layout weaker.

Aim of the invention is also reached by devices for measurement of mutual distance of two magnets always formed with set of at least one quaternary of elementary members combined in Halbach field its base is that at least one Hall sensor is located near to passive side of the Halbach field.

At this time the Hall sensor in specially suitable combination is against active magnetic pole, while with its scanning surface is near to its north or south pole.

In the next version the Hall sensor is between two active magnetic poles while it is oriented with its scanning surface vertically to the direction or in line with the direction of magnetic induction vector in this place. In this version the measured magnetic field is weaker.

In the case stated above the Halbach field has a form of a closed chain, as a ring or polygon. Its active poles are at frontal side of the rings. The rings or polygons can also have the active side radically out or inside the ring.

According to space potential of the device with which the measurement of mutual distance of two magnets is used, the Halbach field can also be suitable in form of a straight chain.

### Description of the drawing

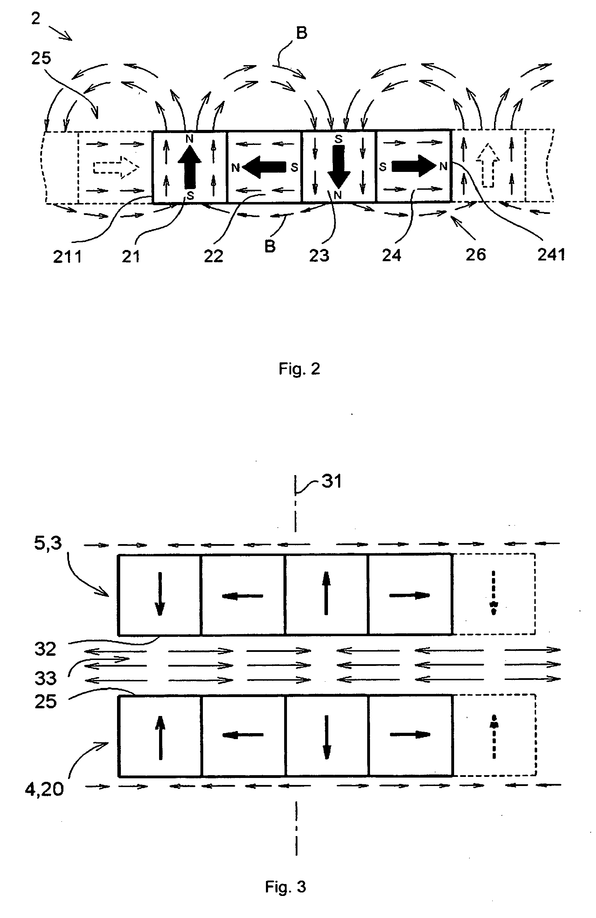

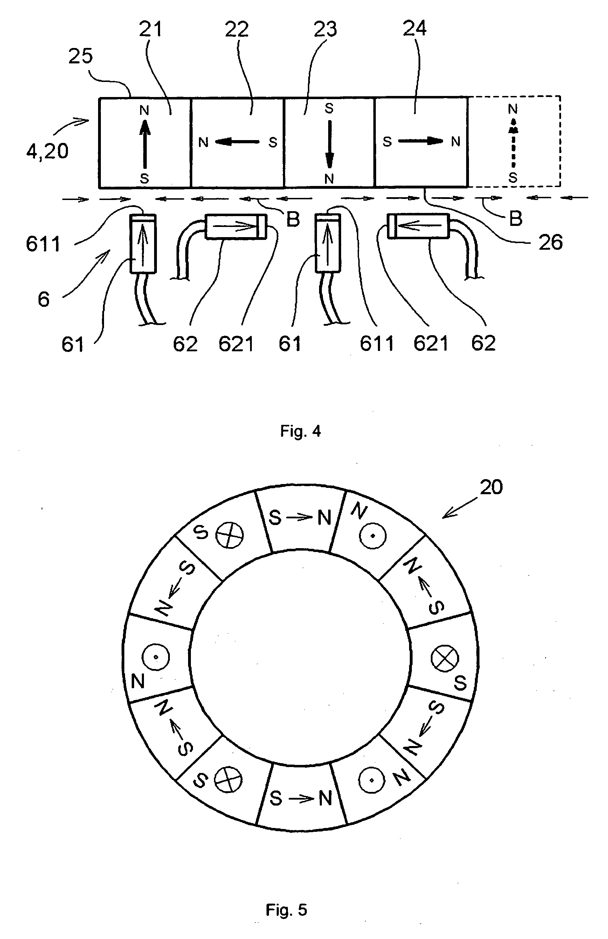

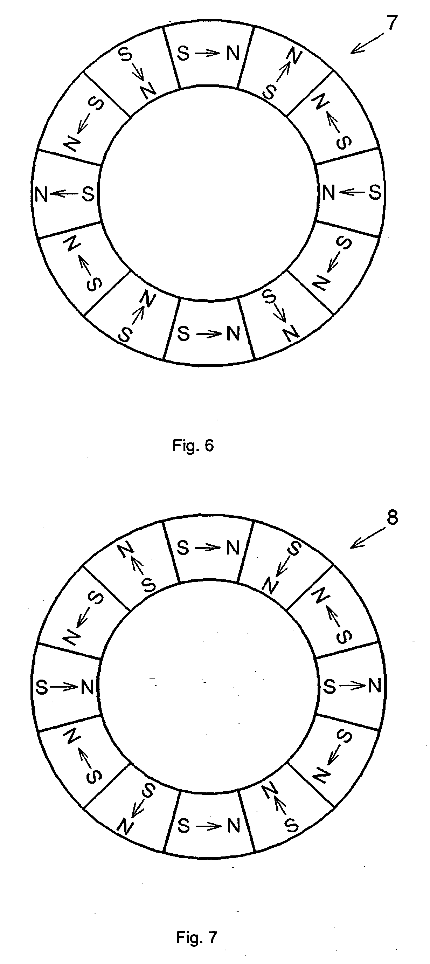

The device according to the invention and related combination according to the present state of the art is schematically shown in the drawing where the fig. 1a and 1b shows the layout of two circular magnets and relevant dependance of Hall sensor signal on the magnets mutual distance, fig. 2 Halbach field, formed with regularly repeating structure of four differently oriented elementary members, fig. 3 a side view of two approaching magnets formed by Halbach fields, fig. 4 a side view of combination of Hall sensors at passive side of the adjustable magnet according to the invention, fig. 5 a ground - plan of the adjustable magnet formed by axial ring Halbach field from the fig. 2 to 4, fig. 6 a ground - plan of Halbach radial annular field with active side outside the ring and fig. 7 of Halbach radial annular field with active side inside the ring.

### Examples of embodiment

On fig. 2 there is the known linear Halbach field **2** formed by a line of repeating chains of quaternaries of magnetic dipoles in form of a cube that are in further text related to the Halbach field referred as the first to fourth elementary member **21**, **22, 23**, **24**. With arrows the directions of magnetisation of particular elementary members are marked from which the Halbach field is composed and vectors of magnetic induction are drawn **B**. By mutual interaction of elementary members of Halbach field a resulting magnetic field is formed that at the side of magnets **25** strengthens the magnetic field and on the opposite side **26** weakens, eventually completely suppresses. The side with strengthened magnetic effect **25** is an active side and the side with reduced effect **26** is the passive side of the created magnetic polypole forming the Halbach field. At the shown combination of particular elementary members **21**, **22**, **23**, **24** thus at upper active side **25** a set of strengthened north magnetic poles **N** and south magnetic poles **S** was created, at the lower passive side **26** the poles are reversed but very weakened. Analogously as the linear Halbach field **2** with **n** quaternaries of elementary members **21**, **22**, **23**, **24** behaves the axial annular Halbach field **20** with axial force effect that is created by rolling of the linear Halbach field **2** in a circle laying in level vertical to the drawing pad while for example the wall **241** of n-fourth elementary member **24** is connected with relevant side **211** of the first elementary member **21**. The elementary members **21**, **22**, **23**, **24** then have a form of circular segments or trapezoids or cubes used together with key made from a suitable ferromagnetic material.

On fig. 3 there is an adjustable magnet **4** shown which is formed by the axial annular Halbach field **20** and movable magnet **5** formed by the axial annular Halbach field **3.** By the term "adjustable magnet" hereinafter a magnet is understood its position is in a certain, relatively small range adjustable because the magnet is firmly fixed on the device. The common axis **31** of the magnets **4, 5** lies in drawing pad, the Halbach fields **20**, **3** are turned to themselves with its active sides **25** and **32**. When these fields **20**, **3,** are approaching, their magnetic field in the gap **33** between them influences one another and with its reducing distance the magnetic induction grows. The size of repulsive force is proportional to sizes of components of magnetic induction vectors in direction of the axis **31** and thus in direction of the axis of mutual movement of adjustable and movable magnets **4**, **5.**

There are devices requiring intensive braking of moving inertial masses at their run down to the dead point of direct or circular reverse motion and recuperation of the spent kinetic energy for use at start of the inertial masses back from the dead point. The traverse motion system of long textile machinery coiling mechanisms that have a line of adjacent working places can serve as an example. Here it is necessary to brake and again start in opposite direction a tens metres long traversing rod with accessories. Use of repulsive force requires among other also approaching of magnets to the minimal mutual distance. Location of Hall sensor between the magnets is not convenient in these cases.

As stated above the magnetic field is weak at the passive side of the Halbach field. However the device according to the invention is based upon the use of specific properties of this very part of the magnetic field.

On fig. 4 there is the adjustable magnet **4** shown which is formed by axial annular Halbach field **20** from fig. 3, its active side **25** is turned to the active side of here not shown annular Halbach field **3** of the movable magnet **5**. On fig. 4 there are also shown four suitable alternative placements of Hall sensors (here generally marked with the relation sign **6**). They are always located as close as possible to the passive side **26** of the Halbach field **20** forming the adjustable magnet **4**.

In the most convenient combination the Hall sensor **61** is located with its scanning surface **611** against to active south or north pole **S**, **N**, thus its scanning surface **611** is parallel with face surface of the elementary member **21** or **23** of the Halbach field **20**, thus it is parallel with the front face of the passive side **26** of the annular Halbach field **20**. Both of the alternatives are equal in respect of the function.

Considering the rather weaker magnetic fields the positions of the Hall sensor **62** are less convenient. It is located between the active poles with elementary members **22** or **24**, while its scanning surface is vertical to the direction of the vector **B** of the magnetic induction. In term of the function it is equal if the scanning surface **621** of the Hall sensor **62** is oriented anti the direction of the vector **B** of the magnetic induction as it is shown on fig. 4, or conversely in the direction of the vector **B** of the magnetic induction.

The combination of the Hall sensors **61**, **62** is for the measurement of magnetic field at magnets used for braking and start-up of inertial masses with alternate movements very convenient. Though the magnetic field is weak at passive side of the Halbach field, the change of magnetic field and thus the change of the signal **U** from Hall sensor is here higher with reducing distance of the magnets and this enables an easier and more accurate definition of magnet distance. Further advantage is that the monotonous growth of the signal **U** from the Hall sensor its course does not show the peak **V**, which is characteristic at location of the Hall sensor out of the magnet contour (fig. 1a, 1b). This enables an easier evaluation of the signal and more accurate measurement of the close distance of the magnets. Another very convenient advantage is that the free space between the magnets enables to close them even to the minimum safe distance and thus use its maximum repulsive force.

Analogously with axial annular Halbach field its ground-plan is shown on fig. 5, the radial annular Halbach field can be combined. The variant of the radial annular Halbach field **7** with active side out of the ring is shown on fig. 6, the variant of the radial annular Halbach field **8** with active side inside the ring is shown on fig. 7.

With all above stated fields the directions of circumferential magnetisation of the segments can be replaced with transversal directions of circumferential magnetisation to reach an optimised effect of the Halbach field.

### List of relation signs

- 1: combination according to the present state of the art
- 11: adjustable, eventually non-movable magnet
- 12: movable magnet
- 13: Hall sensor
- 2: linear Halbach field
- 20: axial annular Halbach field
- 21: first elementary member of the Halbach field
- 211: outside wall of 1st element
- 22: second elementary member of the Halbach field
- 23: third elementary member of the Halbach field
- 24: fourth elementary member of the Halbach field
- 241: outside wall (of the fourth elementary member)
- 25: active side (of the Halbach field)
- 26: passive side (of the Halbach field)
- 3: axial annular Halbach field
- 31: annular magnet axis
- 32: active side (of the Halbach field)
- 33: gap (between the magnets)
- 4: adjustable eventually fixed magnet (formed by Halbach field)
- 5: movable magnet (formed by Halbach field)
- 6: Hall sensor
- 61: Hall sensor
- 611: scanning surface of the Hall sensor
- 62: Hall sensor
- 621: scanning surface of the Hall sensor
- 7: radial annular Halbach field with active side out of the ring
- 8: radial annular Halbach field with active side inside the ring
- B: vector of magnetic induction
- N: north magnetic pole
- S: south magnetic pole
- U: Hall sensor signal
- Uₓ₂: Hall sensor signal at position of the magnet x₂
- Uₓ₄: Hall sensor signal at position of the magnet x₄
- V: peak of dependence of the Hall voltage on distance of the magnets x₀...x₄ mutual distance of magnet faces

## Claims

1. Method for measurement of mutual distance of two repulsing and mutually moving magnets (4, 5), which are arranged as an adjustable and a movable magnet (4, 5) both producing Halbach fields (2, 20, 3), during which the Hall voltage characterising the magnetic induction generated by actuation of the magnetic field is measured, **characterised in that** the Hall voltage is measured on the passive side (26) of the Halbach field (2, 20) formed by the adjustable magnet (4).

2. Method according to the claim 1, **characterised in that** the Hall voltage is measured in the place against to the north or south magnetic poles of at least one active magnetic pole of the elementary member (21, 23) in a way the Hall sensor (61) is turned with its scanning surface (611) to this pole.

3. Method according to the claim 1, **characterised in that** the Hall voltage is measured in the place between the north and south magnetic pole of at least one pair of active magnetic poles of the elementary members (21, 23) in a way the Hall sensor (62) is oriented with its scanning surface (621) perpendicularly to the direction of vectors (B) of the magnetic induction in this place.

4. Device for measurement of mutual distance of two magnets (4, 5), which are arranged as an adjustable and a movable magnet (4, 5) and both formed by a set of at least four elementary magnetic dipole members (21, 22, 23, 24) arranged so as to produce Halbach fields (2, 20, 3), **characterised in that** at least one Hall sensor (62) is located on the passive side (26) of the Halbach field (2, 20) formed by the adjustable magnet (4).

5. Device according to the claim 4, **characterised in that** the Hall sensor (61) is located against the active magnetic pole of the elementary members (21, 23), while it is turned with its scanning surface (611) to the north or south pole (N, S).

6. Device according to the claim 4, **characterised in that** the Hall sensor (62) is located between two active magnetic poles of the elementary members (21, 23), while it is oriented with its scanning surface (621) perpendicularly to the direction of the vector (B) of the magnetic induction in this place.

7. Device according to any claim 4 to 6, **characterised in that** the Halbach field (20, 3) has a shape of closed chain.

8. Device according to the claim 7, **characterised in that** the chain is a ring.

9. Device according to the claim 7, **characterised in that** the chain is a polygon.

10. A device according to any claim 4 to 6, **characterised in that** the Halbach field (20, 3) has a shape of a straight chain.

## Patentansprüche

1. Verfahren zur Messung des gegenseitigen Abstandes von zwei sich abstoßenden und sich gegenseitig bewegenden Magneten (4, 5), die als verstellbarer und beweglicher Magnet (4, 5) angeordnet werden, beide bilden ein Halbach-Array (2, 20, 3), bei dem die Hallspannung gemessen wird, die die magnetische Induktion charakterisiert, die durch die Wirkung des magnetischen Feldes generiert wird, **dadurch gekennzeichnet dass** die Hallspannung auf der passiven Seite (26) des Halbach-Arrays (2, 20) gemessen wird, das durch den verstellbaren Magnet (4) gebildet wird.

2. Verfahren nach dem Anspruch 1, **dadurch gekennzeichnet dass** die Hallspannung in der Stelle gegen den nördlichen oder südlichen magnetischen Pol von mindestens einem aktiven magnetischen Pol des elementaren Glieds (21, 23) auf solche Weise gemessen wird, dass der Hall-Sensor (61) mit der Abtastfläche (611) diesem Pol zugewandt wird.

3. Verfahren nach dem Anspruch 1, **dadurch gekennzeichnet dass** die Hallspannung in der Stelle zwischen dem nördlichen und südlichen magnetischen Pol von mindestens einem Paar der aktiven magnetischen Pole der elementaren Glieder (21, 23) auf solche Weise gemessen wird, dass der Hall-Sensor (62) mit der Abtastfläche (621) senkrecht zur Richtung der Vektoren (B) der magnetischen Induktion in dieser Stelle orientiert wird.

4. Einrichtung zur Messung des gegenseitigen Abstandes von zwei Magneten (4, 5), die als verstellbarer und beweglicher Magnet (4, 5) angeordnet sind und die durch das System von mindestens vier elementaren Dipolgliedern (21, 22, 23, 24) gebildet werden, die zur Bildung des Halbach-Arrays (2, 3, 20) angeordnet sind, **dadurch gekennzeichnet dass** mindestens ein Hall-Sensor (61, 62) auf der passiven Seite (26) des Halbach-Feldes (2, 20) platziert ist, das durch den verstellbaren Magnet (4) gebildet wird.

5. Einrichtung nach dem Anspruch 4, **dadurch gekennzeichnet dass** sich der Hall-Sensor (61) gegen den aktiven magnetischen Pol der elementaren Glieder (21, 23) befindet, wobei dieser mit seiner Abtastseite (611) dem nördlichen oder südlichen Pol (N, S) zugewandt ist.

6. Einrichtung nach dem Anspruch 4, **dadurch gekennzeichnet dass** sich der Hall-Sensor (62) zwischen zwei aktiven magnetischen Polen der elementaren Glieder (21, 23) befindet, wobei dieser mit seiner Abtastseite (621) senkrecht zur Richtung des Vektors (B) der magnetischen Induktion in dieser Stelle orientiert ist.

7. Einrichtung nach einem der Ansprüche 4 bis 6, **dadurch gekennzeichnet dass** der Halbach-Array (20, 3) die Form einer geschlossenen Kette aufweist.

8. Einrichtung nach dem Anspruch 7, **dadurch gekennzeichnet dass** die Kette ein Ring ist.

9. Einrichtung nach dem Anspruch 7, **dadurch gekennzeichnet dass** die Kette ein Vieleck ist.

10. Einrichtung nach einem der Ansprüche 4 bis 6, **dadurch gekennzeichnet dass** der Halbach-Array (2) die Form einer direkten Kette aufweist.

## Revendications

1. Procédé de mesurer la distance mutuelle des deux aimants répulsifs et mutuellement mouvants (4, 5) qui sont rangés de façon q'un aimant réglable, et un aimant mobile (4, 5); tous les deux formant le Halbach-Array (2, 20, 3), pendant lequel on mesure la tension de Hall qui charactérise l'induction magnétique générée par l'activité du champs magnétique, **caractérisé en ce que** la tension de Hall est mesurée sur le côté passif (26) du Halbach-Array (2, 20) formé par l'aimant réglable (4).

2. Procédé suivant la revendication 1, **caractérisé en ce que** la tension de Hall est mesurée sur l'endroit en face du pôle Nord ou du pôle Sud du champs magnétique au moins d'un pôle magnétique actif du membre élémentaire (21, 23) de façon que le lecteur de Hall (61) tourne la surface de la lecture (611) vers ce pôle.

3. Procédé suivant la revendication 1, **caractérisé en ce que** la tension de Hall est mesurée sur l'endroit entre le pôle Nord et le pôle Sud du champs magnétique au moins d'un paire des pôles magnétiques actifs des membres élémentaires (21, 23) de façon que le lecteur de Hall (62) oriente la surface de la lecture (621) perpendiculairement à la direction des vecteurs (B) de l'induction magnétique dans cet endroit.

4. Dispositif pour mesurer la distance mutuelle des deux aimants (4, 5) qui sont rangés de façon q'un aimant réglable et un aimant mobile (4, 5); et les deux soient formés par l'ensemble au moins de quatre membres élémentaires dipolaires (21, 22, 23, 24), rangés pour former le Halbach-Array (2, 3, 20), **caractérisé en ce qu'**au moins un des lecteurs de Hall (61, 62) est placé sur le le côté passif (26) du Halbach-Array (2, 20) formé par l'aimant réglable (4).

5. Dispositif suivant la revendication 4, **caractérisé en ce que** le lecteur de Hall (61) se trouve en face du pôle magnétique actif du membre élémentaire (21, 23), en temps que par son côté de lecture (611) il est tourné vers le pôle Nord ou le pôle Sud (N, S).

6. Dispositif suivant la revendication 4, **caractérisé en ce que** le lecteur de Hall (62) se trouve entre deux pôles magnétiques actifs des membres élémentaires (21, 23), en temps que par son côté de lecture (611) il est orienté perpendiculairement à la direction des vecteurs (B) de l'induction magnétique dans cet endroit.

7. Dispositif suivant quelconque des revendications de 4 à 6, **caractérisé en ce que** le Halbach-Array (20, 3) a la forme d'une chaîne fermée.

8. Dispositif suivant la revendication 7, **caractérisé en ce que** la chaîne est un anneau.

9. Dispositif suivant la revendication 7, **caractérisé en ce que** la chaîne est un polygone.

10. Dispositif suivant quelconque des revendications de 4 à 6, **caractérisé en ce que** le Halbach-Array (2) a la forme d'une chaîne directe.
